# EUROPEAN PATENT SPECIFICATION

(11) **EP 0 550 856 B1**
(45) Date of publication and mention of the grant of the patent: **12.07.1995**
(21) Application number: 92121442.5
(22) Date of filing: 17.12.1992
(51) Int. Cl.: A01K 27/00

(54) **Pet rope winder**
Aufrollbare Leine für Haustiere
Attaché déverrouillable pour laisses pour animaux domestiques

(30) Priority: 10.01.1992 JP 532/92
(43) Date of publication of application: 14.07.1993
(73) Proprietor: DAIDO TOKUSHUKO KABUSHIKI KAISHA, Naka-ku Nagoya-shi Aichi-ken (JP)
(72) Inventor: Kondo, Takanori, Urawa-shi, Saitama (JP)
(74) Representative: Kügele, Bernhard

(56) References cited:
- DE-A- 2 232 814
- US-A- 4 018 189
- US-A- 4 165 713

## Description

### [ Field of the Invention ]

This invention relates to a pet rope winder which automatically winds up a rope to be connected to, for instance, a dog collar.

### [ Background of the Invention and Related Art Statement ]

In this type of devices based on the prior art, for instance a reel is rotatably mounted in a case and is energized in one direction by a spring, a rope is wound around this reel in the direction contrary to that in which the reel is energized, and a lock mechanism which can stop the rope once wound around the reel and then dispensed by a specified length at the specified position is provided therein for locking to prevent the rope from being dispensed more or wound up again.

In the prior art-based devices as described above, however, after locking is released, if the rope is wound in too fast a speed, a metal fitting at an edge of the rope jumps, which may give an unexpected injury to the user, and for this reason the spring to energize the reel is made thinner and longer to make the reel's energizing force weaker (to a low torque) for damping the reel's speed to wind up the rope. In this case, however, the winder does not work smoothly, which is a problem to be solved.

### [ Object and Summary of the Invention ]

An object of the present invention is to provide a pet rope winder which can solve the problem as described above, namely a pet rope winder which can lock a rope with a locking mechanism for preventing the rope from being wound up or dispensed more and also can completely and smoothly wind up the rope to its end in a low speed.

In order to achieve the object as described above, a pet rope winder according to the present invention has a centrifugal brake mechanism. With this mechanism, it is possible to wind up a rope in a low speed because the rotational speed of the reel is controlled by the centrifugal brake mechanism.

In the pet rope winder according to the present invention, as described above, the reel can be controlled by the centrifugal brake mechanism, so that it is possible to wind up a rope in a low speed. In addition, smooth operation can not be expected in pet rope winders based on the prior art, the pet rope winder according to the present invention can smoothly wind up a rope and is very practical.

In one embodiment of the present invention, the centrifugal brake mechanism comprises a pocket section arranged in the reel and a brake piece moveably accommodated in said pocket section facing an inner peripheral wall at a small clearance therefrom, and with this feature the centrifugal brake mechanism can easily be assembled and installed in a small space inside the case, and the manufacturing cost is very cheap. Also in another embodiment of the present invention, the brake piece is made of either resin or rubber, and because of this feature noises generated due to friction between the brake piece and the inner wall of the case when a braking force is loaded to the reel can be eliminated.

### [ Description of the Drawings ]

FIG.1 is a partially broken flat view of a pet rope according to the present invention,
FIG.2 is a cross section taken along the line A-A in FIG.1,
FIG.3A is a flat view of a reel,
FIG. 3B is a cross section taken along the line B-B in FIG.3A,
FIG. 3C is a cross section taken along the line C-C in FIG.3A,
FIG. 3D is a partially broken bottom view of a reel,
FIG. 3E is a front view of the section shown in FIG. 3D viewed from the direction indicated by arrow mark E,
FIG.4 is a bottom view of a key section of the upper case,
FIG. 5A is a flat view of a locking member, and
FIG. 5B is a cross section of the portion shown in FIG. 5A taken along the line B-B.

### [ Detailed Description of Preferred Embodiments ]

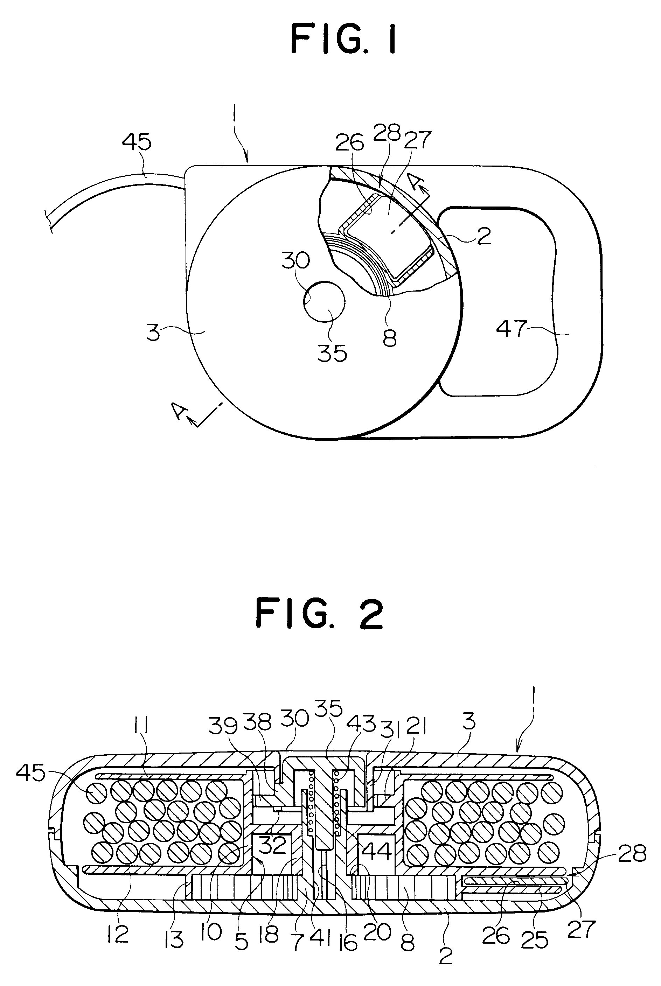

In FIGS. 1 and 2, the numeral 1 indicates a case which comprises a lower case 2 and an upper case 3. A reel 5 is rotatably installed being supported by a central shaft 7 arranged in the lower case 2 and also being energized by a spring 8 in one direction.

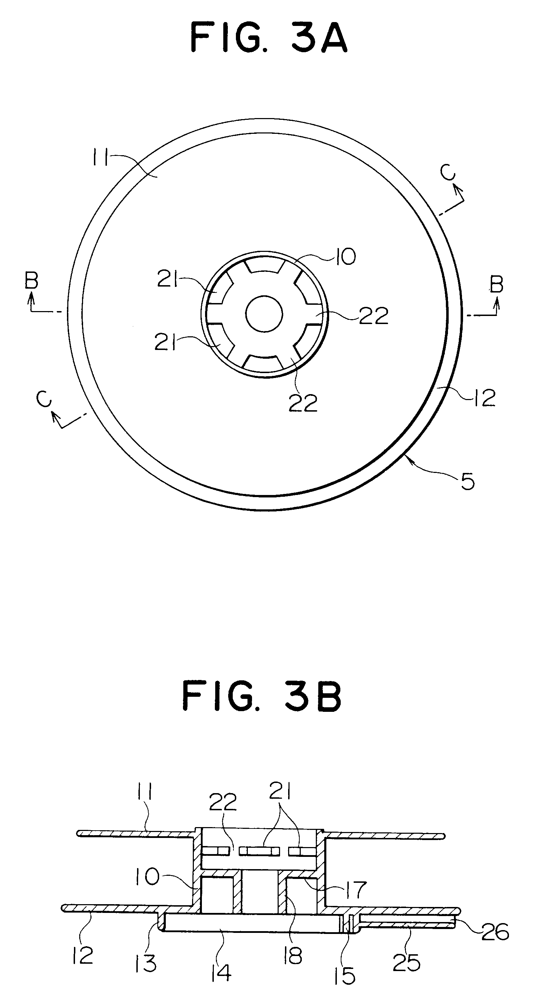

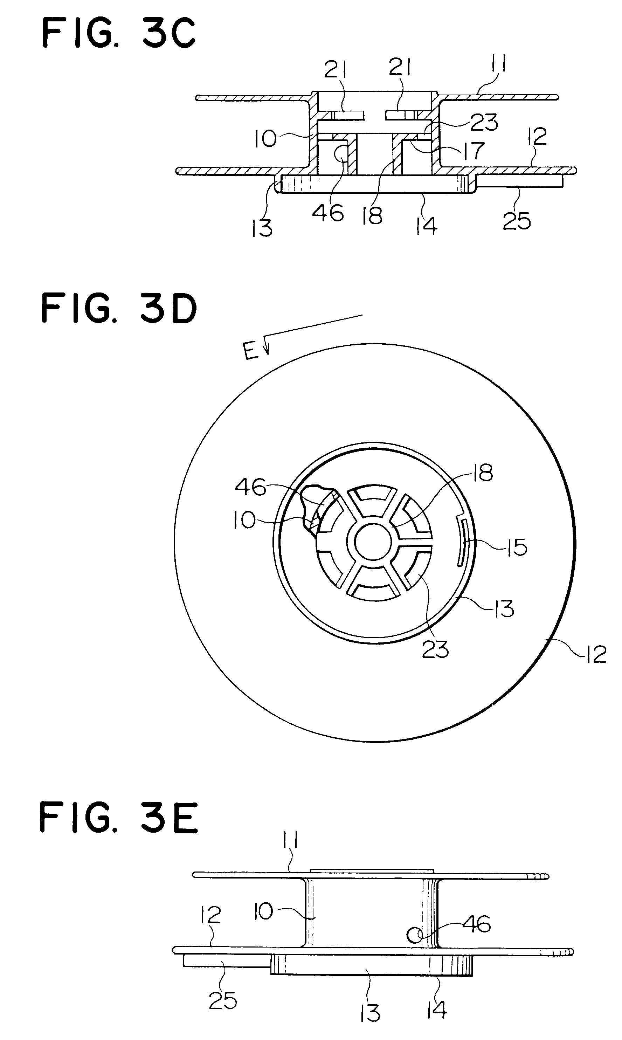

As shown in FIG. 3A to 3E, the reel 5 has a hollow basic body 10 of the reel and a circular flange 11 is provided on an outer periphery of one edge of said basic body. Also, a circular flange 12, which is somewhat larger than the flange 11, is provided on an outer periphery of another edge of said body 10, and this flange 12 and a cylindrical section 13 constitute a supporting frame 14 for the spring 8. The numeral 15 indicates a locking piece provided on the supporting frame 14, and an outer edge of the spring 8 is locked in this locking piece 15, and an inner edge is supported in the supporting frame 14 being locked in a locking groove arranged in the central shaft 7 to energize the reel 5 in one direction.

A circular wall 17 is arranged at almost a central position of the inner face of the basic body 10 of the reel, and on the inner periphery of said circular wall is arranged a hollow supporting cylinder 18 engaged in and supported by the central shaft 7 facing the other edge side of the basic body 10 of the reel. The tip of the supporting cylinder almost coinsides with the other edge periphery of the basic body 10 of the reel, and said tip contacts a staged section 20 having a small diameter arranged in the central shaft when the reel 5 is installed. A plurality of (6 pieces in this example) locking protrusions 21 each having the same size are arranged at almost a central position between the circular wall 17 on the inner face of the basic section 10 of the reel and the edge periphery with a groove section 22 at an equal interval between each locking protrusions. The numeral 23 is a through-hole arranged on the circular wall 17.

In the outer periphery side of the flange 12 of the reel 5 is arranged a shrouding hole 25, a pocket section 26 having an opening only in the inner peripheral surface of the case 1 enclosed by said shrouding wall and the flange 12, a brake piece 27 is moveably accommodated in said pocket section at a small clearance with the inner peripheral wall of the case 1, and these pocket section 26 and the brake piece 27 constitute a centrifugal brake mechanism 28 which controls movement of the reel 5. Any material is available so long as the brake piece 27 has a certain weight, but such materials as a ironic plate, polychrolinated vinyl, and rubber are preferable.

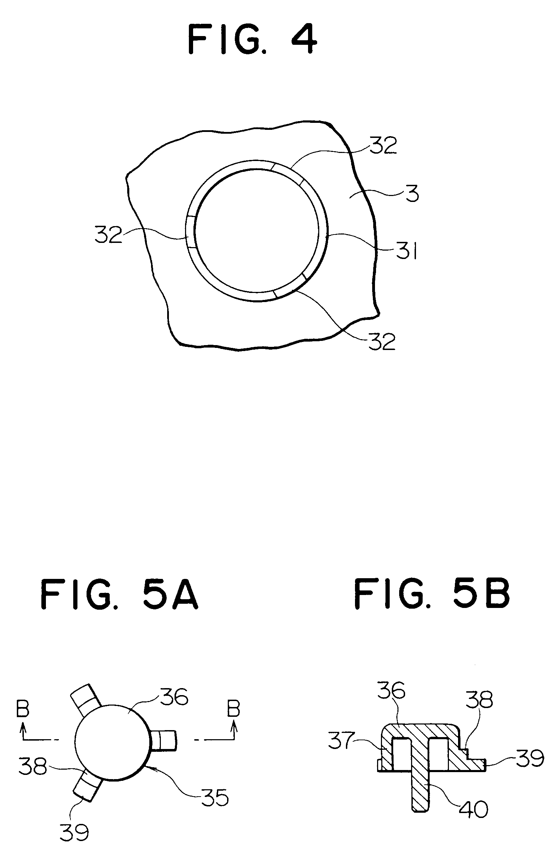

On the other hand, a circular opening 30 is arranged in the side wall of the upper case facing the central shaft of the lower case 2, and a hollow and cylindrical guide cylinder 31 to accommodate a locking member described later is arranged on said opening periphery with the tip protruded up to a position beyond the locking protrusion 21 of the reel 5. A plurality of (3 pieces in this case) locking member positioning holes 32 are arranged at the tip of the guide cylinder 31 at an equal space with the tip opened as shown in FIG. 4.

A locking member 35 is accommodated moveably in the axial direction of the reel 5 inside the guide cylinder 31. As shown in FIGS. 5A and 5B, the same number of positioning protrusions 38 each locked in a positioning hole 32 of the guide cylinder 31 as the number of said holes are arranged on the lower external peripheral surface of the cylinder section 37 having a vertex wall 36, and a locking protrusion 39 engaged in the groove section 22 between locking protrusions 21 of the reel 5 and locked in the locking protrusion 21 in the peripheral direction is arranged. The numeral 40 indicates a guide rod hanging from a central portion of the vertex wall 36 of the cylinder 37, which is moveably engaged in a shaft hole 41 of the central shaft 7. The numeral 43 indicates a spring to energize upward the locking protrusion 39 of the locking member 35 so that said protrusion 38 is engaged in the groove 22 to keep the reel 5 always locked in the locking protrusion 21, and this spring is installed between a receiving groove 44 formed in the lower portion of the shaft hole 41 and the vertex wall 36 of the locking member 35.

The numeral 45 is a pet rope having a specified length, and one edge side thereof is inserted into the case 1 from a rope dispensing port (not shown) arranged in the case 1, and is wound around on the external surface of the basic body 10 of the reel between the two flanges 11 and 12 in the direction contrary to that in which the rope is energized by the spring 8. And, one end of the rope 45 is led into inside of the supporting cylinder 18 from the rope receiving port 46 and is fixed to said supporting cylinder or others with an appropriate means. In FIG. 1, the numeral 47 indicates a handle which a user holds the case with the above described mechanism.

Then, description is made below for operations of this embodiment. FIG. 2 shows a state where the rope 45 has been wound around the reel 5, namely a state where most of the rope 45 has been accommodated inside the case and is not used. In this state, the locking protrusion 39 of the locking member 35 is engaged in the groove section 22 between the locking protrusions 21 on the reel 5, and is locked in said locking protrusion 21 so that the reel 5 will not turn. As clearly shown in FIG. 2, also in this locked state, the locking member does not protrudes from the opening 30 to the surface of the upper case 3, so that the locking member will never be pushed in carelessly.

To draw out the rope 45 from inside of the case 1 for use, the locking member 35 is pushed in against a force of a spring 43 by inserting a finger tip or other appropriate tool. With this, the locking protrusion 39 of the locking member 35 moves to the lower part of the groove 22 between the locking protrusions 21 of the reel 5, and locking with the locking protrusion 21 is released, so the rope 45 at around the aforesaid dispensing port is pulled out keeping this unlocked state and the rope 45 wound around the reel 5 is gradually pulled out. And, when pushing the locking member 35 is ceased after the rope has been pulled out by a specified length, the lock member 35 moves upward due to a force by the spring 43, and the locking protrusion 39 is engaged in the groove 22 between the locking protrusions of the reel 6 to be locked in the locking protrusion, thus the locked state being restored again. For this reason, the rope 45 is not pulled out any more, and the rope pulled out by a specified length can be used in the locked state. Note that, although sometimes the locking protrusion 39 hits the lower surface of the protrusion 21 and is not engaged in the groove 22 smoothly, the rope 45 can easily be engaged in the groove 22 by slightly pulling it and giving a driving force to the reel 5.

To wind up the rope 45 around the reel 5 inside the case 1 after use, locking between the locking protrusion 39 and the locking protrusion 21 is released by pushing in the locking member 35 as described above. With this operation, the reel 5 rotates in the direction to wind up the rope 45 due to a force of the spring 8 and the pulled-out role is wound around the reel 5. When the reel 5 rotates to wind up the rope, the brake piece 27 accommodated in the pocket section 26 of the reel 5 slide to the outer side due to the centrifugal force, and the tip slidingly contact the inner peripheral surface of the lower case 2. With this, centrifugal braking force is loaded to the reel 5, and the rope 45 is wound up in a slow speed.

After wound up, when pushing the lock member 35 is ceased, the locking member 35 is engaged in the groove 22 between the locking protrusions on the reel 5 to be locked with the locking protrusion 21, thus the locking state being realized.

Note that the centrifugal brake mechanism as described above is only one example, and particular designs other than the one described above are also acceptable. Also the above description assumes a device to wind up a rope set to a dog ring, but it is needless to say that this construction can be applied to a device to wind up a rope for other pets.

Although a particular preferred embodiment of the invention has been disclosed in detail for illustrative purposes, it will be recognized that variations or modifications of the disclosed apparatus, including the rearrangement of parts, lie within the scope of the present invention, as defined by the appended claims.

## Claims

1. A pet rope winder (1) wherein a rope (45) wound around a reel (5) can not be pulled out nor wound up any more by locking said reel rotatably accommodated in a case (2,3); characterized in that a centrifugal brake mechanism (28) to control the speed of rotational movement of the aforesaid reel is provided.

2. The pet rope winder according to Claim 1 with the centrifugal brake mechanism (28) comprising a pocket section (26) in said reel and a brake piece (27) moveably accommodated in said pocket section (26) and having a small clearance with the inner peripheral wall of the case (2,3).

3. The pet rope winder according to Claim 2 with the brake piece (27) made of either resin or rubber.

## Patentansprüche

1. Aufroller (1) für eine Leine für Haustiere, bei dem eine rund um eine Spule (5) aufgerollte Leine (45) durch Verriegelung der drehbar in einem Gehäuse (2, 3) untergebrachten Spule weder weiter herausgezogen, noch aufgerollt werden kann; dadurch gekennzeichnet, daß ein Zentrifugalbremsmechanismus (28) zur Steuerung der Geschwindigkeit der Drehbewegung der Spule vorgesehen ist.

2. Aufroller für eine Leine für Haustiere nach Anspruch 1, bei dem der Zentrifugalbremsmechanismus (28) einen Taschenabschnitt (26) an der Spule und ein in dem Taschenabschnitt (26) beweglich untergebrachtes Bremsstück (27) mit geringem Abstand zur inneren Umfangsfläche des Gehäuses (2, 3) aufweist.

3. Aufroller für eine Leine für Haustiere nach Anspruch 2, bei dem das Bremsstück (27) entweder aus einem Harze oder aus Gummi hergestellt ist.

## Revendications

1. Bobinoir (1) pour laisse d'animal domestique, dans lequel une laisse (45) bobinée autour d'un rouleau (5) ne peut être sortie ni bobinée davantage par blocage dudit rouleau reçu en rotation dans un boîtier (2, 3)
caractérisé en ce qu'un mécanisme de frein centrifuge (28) pour commander la vitesse de rotation du rouleau ci-dessus est fourni.

2. Bobinoir pour laisse d'animal domestique selon la revendication 1, avec le mécanisme de frein centrifuge (28) comprenant une section à alvéole (26) dans ledit rouleau et une pièce de frein (27) reçue de manière amovible dans ladite section à alvéole (26) et ayant un petit jeu avec la paroi périphérique intérieure du boîtier (2, 3).

3. Bobinoir pour laisse d'animal domestique selon la revendication 2, avec la pièce de frein (27) réalisée soit en résine soit en caoutchouc.
